# EUROPÄISCHE PATENTANMELDUNG

(11) **EP 3 950 256 A1**
(43) Veröffentlichungstag der Anmeldung: **09.02.2022**
(21) Anmeldenummer: 20382726.6
(22) Anmeldetag: 05.08.2020
(51) Int. Cl.: B29C 45/00, B29B 11/14, B29C 49/06, B29C 49/64, B29K 105/00, B29C 45/72

(54) **VERFAHREN ZUR HERSTELLUNG EINES PREFORMS**

(71) Anmelder: Alpla-Werke Alwin Lehner GmbH und Co. KG, 6971 Hard (AT)
(72) Erfinder: EXPÓSITO RODA, Gustavo, 46340 Requena (ES)
(74) Vertreter: González López-Menchero, Álvaro Luis

(57) **Zusammenfassung**

Die Erfindung betrifft ein Verfahren zur Herstellung eines Preforms (11) wobei der Preform (11) nachdem er spritzgegossen wurde noch heiss in eine Abkühlvorrichtung (25) eingesetzt wird, welche Abkühlvorrichtung (25) einen Innenraum (29) aufweist, dessen Innenkonturen den Aussenkonturen des Preforms entsprechen, und zwischen den Innenkonturen des Innenraumes (29) und den Aussenkonturen des Preforms (11) ein Unterdruck erzeugt wird. Der beim Spritzgiessen an dem Preform (11) entstandene Anspritzpunkt (23) wird durch den Unterdruck an einen an der Innenkontur vorhandenen Stempel (39) gedrückt und an dem Stempel (39) verpresst.

## Beschreibung

### Gebiet der Erfindung

Die Erfindung betrifft eine Verfahren zur Herstellung eines Preforms gemäss Oberbegriff des Anspruchs 1 sowie eine Abkühlvorrichtung zur Abkühlung eines Preforms gemäss Oberbegriff des Anspruchs 4 und einen Preform gemäss Oberbegriff des Anspruches 12 sowie einen Kunststoffbehälter gemäß Oberbegriff des Anspruchs 14.

### Stand der Technik

Preforms, welche dafür vorgesehen sind im Streckblasverfahren zu Flaschen umgeformt zu werden, besitzen üblicherweise einen Anspritzpunkt. Der Anspritzpunkt entsteht bei der Ausformung des Preforms in der Spritzgussform an der Einspritzstelle, da der Einlass des geschmolzenen eingespritzten Kunststoffes von der übrigen Schmelze im Heißkanal abgetrennt werden muss. Häufig geschieht dies mit einem Nadelverschluss, es gibt aber auch andere Formen der Abtrennung.

Der vorhandene Anspritzpunkt ist aus vielen Gründen unerwünscht: Beispielsweise kann an dem Anspritzpunkt sogenanntes "Engelshaar" gebildet werden, welches die Blasform verunreinigen kann. Ferner kann der Anspritzpunkt die Spannungsriss- und Bruchfestigkeit der Flasche negativ beeinflussen und zu ungleichmässigen Materialverteilungen während des Streckblasens führen. Nicht zuletzt ist der Anspritzpunkt optisch wenig ansprechend und ist daher auch aus marketingtechnischen Gründen unerwünscht.

Zur nachträglichen Entfernung des Anspritzpunktes sind Verfahren wie Abschneiden, Abbrennen oder Abbürsten des überschüssigen Materials bekannt. Auch kann der Preform anstatt spritzgegossen formgepresst werden. Diese Arten der Entfernung sind jedoch zeit- und kostenintensiv.

### Aufgabe der Erfindung

Aus den Nachteilen des beschriebenen Stands der Technik resultiert die Aufgabe einen im Spritzgussverfahren hergestellten Preform zu schaffen, der keinen oder einen sehr kleinen Anspritzpunkt aufweist.

Eine weitere Aufgabe besteht darin, dass an dem spritzgegossenen Preform keine Materialfasern oder scharfe Kanten vorhanden sind, welche sich von dem Preform lösen oder abbrechen können und dadurch die Blasform bzw. die geblasene Flasche verunreinigen, was beispielsweise zu unerwünschten Abbildungen oder Abdrücken auf der geblasenen Flasche führen kann.

### Beschreibung

Die Lösung der gestellten Aufgabe gelingt bei einem Verfahren zur Herstellung eines Preforms durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Die Erfindung zeichnet sich bevorzugt dadurch aus, dass der beim Spritzgiessen an dem Preform entstandene Anspritzpunkt durch den Unterdruck an einen an der Innenkontur vorhandenen Stempel gedrückt wird und an dem Stempel verpresst wird. Dadurch wird das notwendige Bearbeiten des Anspritzpunktes nicht in einem zusätzlichen Arbeitsschritt mit einer zusätzlichen Maschine vorgenommen sondern während des ohnedies notwendigen Kühlvorganges. Zusätzlich besitzt der Anspritzpunkt die höchste Temperatur des Preforms bevor der Preform in die Abkühlvorrichtung eingebracht wird. Dadurch lässt sich der Anspritzpunkt durch einen Stempel in der Abkühlvorrichtung besonders einfach verformen oder sogar eliminieren.

Zweckmässigerweise besitzt der Anspritzpunkt nach der Verpressung eine Länge und Höhe von weniger als 1 mm. Je kleiner der Anspritzpunkt bzw. seine Abmessungen nach der Verpressung sind, umso besser werden alle Nachteile, wofür der Anspritzpunkt verantwortlich ist, vermieden.

Als zweckdienlich hat es sich erwiesen, wenn der Unterdruck weniger als 0,9 bar Absolutdruck beträgt. Der Unterdruck für die Abkühlung kann daher unverändert für die Verpressung des Anspritzpunktes beibehalten werden.

Ein weiterer Aspekt der Erfindung betrifft eine Vorrichtung zur Abkühlung eines Preforms gemäss obenstehendem Verfahren. Die Vorrichtung zeichnet sich dadurch aus, dass an der Innenkontur des Innenraumes ein Stempel ausgebildet ist, an welchem der Anspritzpunkt eines Preforms positionierbar ist. Das Vakuum dient daher nicht nur der Abkühlung des Preforms sondern die hierdurch hervorgerufene Kraft verpresst der Anspritzpunkt gegenüber dem restlichen Preform, In der Vorrichtung können daher zwei Prozessschritte gleichzeitig umgesetzt werden.

Zweckmässigerweise ist der Stempel an dem Boden angeordnet, da der Anspritzpunkt üblicherweise an dem Preformboden ausgebildet ist.

In einer besonders bevorzugten Ausführungsform der Erfindung ist die zweite Öffnung an dem Boden vorgesehen und der Stempel ist in der zweiten Öffnung angeordnet. Dadurch lässt sich der Stempel einfach in das bestehende Gehäuse einer Abkühlvorrichtung integrieren.

Die Erfindung zeichnet sich auch bevorzugt dadurch aus, dass der Stempel der Kopf einer Schraube ist, welche Schraube der Befestigung des Bodens dient. Deshalb bedarf es keiner zusätzlichen Stempelvorrichtung und die Befestigungsschraube übernimmt in überraschend einfacher Weise die Stempelfunktion.

In einer weiteren bevorzugten Ausführungsform der Erfindung besitzt der Schraubenkopf die Form eines Aussen-Sechskant-Kopfes. Im Vergleich zu einem Innesechskant-Schraubkopf besitzt dieser eine ausreichend grosse Oberfläche, an welcher der Anspritzpunkt verpresst werden kann. Denkbar sind auch andere Schraubenköpfe sofern diese eine ausreichend grosse Anpressfläche zur Verpressung des Anspritzpunktes aufweisen.

Dadurch, dass der Innendurchmesser der zweiten Öffnung grösser als der grösste Aussendurchmesser des Stempels ist, ist rund um den Stempel Platz, um ausreichend Luft zwischen dem Innenraum und dem Preformkörper absaugen zu können.

In einer weiteren bevorzugten Ausführungsform der Erfindung ist die Schraube derart in der zweiten Öffnung angeordnet, dass die Oberseite des Schraubenkopfes flächenbündig mit dem Boden ist. Dadurch kann der Anspritzpunkt so verpresst werden, dass der Preformboden möglichst plan ist. Denkbar ist, dass der Schraubenkopf in den Innenraum des Gehäuses ragt. Dadurch kann der Anpressdruck auf den Anspritzpunkt bzw. den Preformboden erhöht werden.

In einer weiteren besonders bevorzugten Ausführungsform der Erfindung ist die Höhe des Schraubenkopfes derart bemasst, dass dadurch die Position der Oberseite des Schraubenkopfes relativ zu dem Boden bestimmt ist. Dadurch kann in einfacher Weise durch Bemassung der Höhe des Schraubenkopfes die Stempelfläche in der gewünschten Höhe positioniert werden.

Ein weiterer Aspekt der Erfindung betrifft einen Preform, welcher in der oben beschriebenen Abkühlvorrichtung bearbeitet wurde. Der Preform zeichnet sich dadurch aus, dass der Anspritzpunkt ausgebildet am Boden während des Abkühlvorganges beim Spritzgiessens derart deformiert bzw. verpresst ist, dass er eine Länge und Höhe von weniger als 1 mm besitzt und frei von abstehenden Materialfasern ist. Diese Materialfasern können beispielsweise Engelshaar und Kanten sein, welche sich in der Blasform lösen und beim Ausformen der Flasche deren Oberfläche verunreinigen oder ein Abbild der Verunreinigung auf der geblasenen Flasche ausformen. Solche Materialfasern sind bei dem vorliegenden Preform zuverlässig mit dem Preformboden verpresst. Ausserdem sind die Abmessungen des Anspritzpunktes durch dessen Verpressung minimiert. Der vorliegende Preform weist daher kein der Nachteile auf, welche mit dem Anspritzpunkt in Zusammenhang stehen. Zudem erfolgt die Verkleinerung bzw. Eliminierung des Anspritzpunktes ohne weiteren Zeit- oder Materialaufwand während der Preformproduktion bzw. der Preformkühlung.

Noch ein Aspekt der Erfindung betrifft einen Kunststoffbehälter hergestellt in einem Streckblasverfahren aus einem weiter oben beschriebenen Preform. Durch das Verpressen des Anspritzpunktes während des Abkühlens des Preforms bleibt der Behälter nahezu frei von Spannungen im Bereich des Anspritzpunktes nachdem er streckgeblasen wurde.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Seitenansicht eines Preforms mit Anspritzpunkt;
- Figur 2:: eine Schnittdarstellung des Preforms eingesetzt in eine Abkühlvorrichtung (robot tube);
- Figur 3:: eine vergrösserte Ansicht des Preformbodens;
- Figur 4:: eine Schnittdarstellung des Preforms eingesetzt in eine erfindungsgemässe Abkühlvorrichtung;
- Figur 5:: eine vergrösserte Ansicht des Preformbodens nach Verpressen des Anspritzpunktes ;
- Figur 6:: eine Ansicht der Schraube zur Fixierung des Bodens des robot tubes und
- Figur 7:: eine Draufsicht auf den Boden des robot tubes mit eingesetzter Schraube.

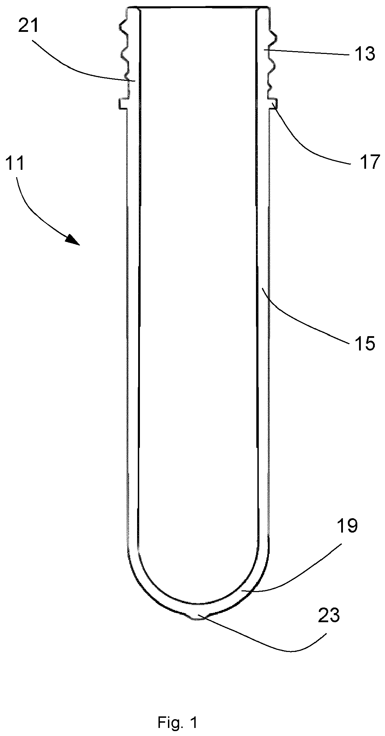

In der Figur 1 ist ein typischer Preform 11 mit einem Preformhals 13 und einem an den Preformhals 13 anschliessenden Preformkörper 15. Am Übergang vom Hals 13 zum Körper 15 ist üblicherweise ein Supportring 17 ausgebildet. Der Körper 15 weist an seinem unteren Ende einen Preformboden 19 auf. Am Hals 13 kann ein Aussengewinde 21 ausgeformt sein. Da der Preform 11 im Spritzgussverfahren hergestellt ist, weist er zwangsläufig einen Anspritzpunkt 23 auf. Der Anspritzpunkt 23 entsteht durch den Schmelze-Einlass in die Spritzgussform, welcher von einer Nadel verschlossen werden kann. Der Preform 11 kann aus einer Vielzahl von Kunststoffschmelzen spritzgegossen werden beispielsweise PET, PP, HDPE, PEF, PA, PEN, PLA. Die weitest verbreiteten Kunststoffe sind PET und rPET. Insbesondere bei Preforms für Mehrweganwendungen finden typische Polyester-Materialien wie Akestra, aber auch Tritan und ähnliche Anwendung.

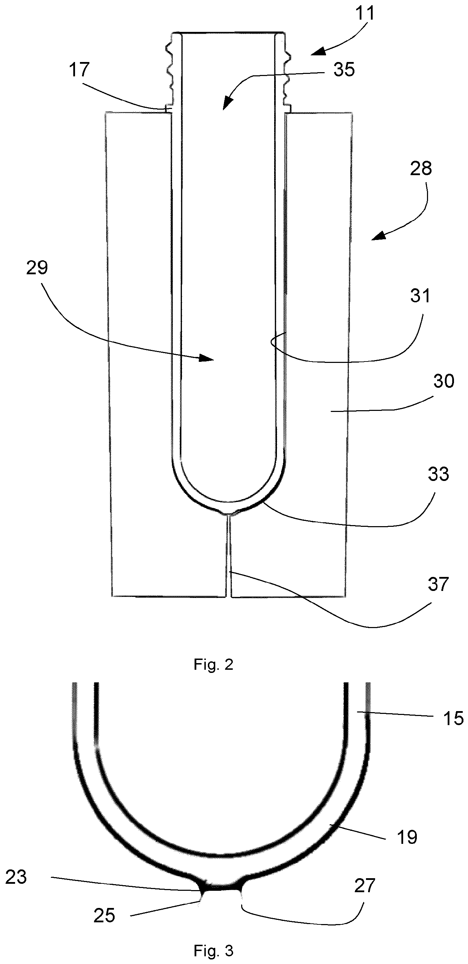

In der Figur 2 ist eine übliche Abkühlvorrichtung gezeigt, in welcher der Anspritzpunkt 23 des Preforms 11 unverändert bleibt.

In der Figur 3 ist gezeigt, welche Ausbildungsformen der Anspritzpunkt 23 annehmen kann. Möglich sind unter anderem scharfe Kanten 25 oder sogenanntes Engelshaar 27. Solche Ausbildungen sind unerwünscht, da diese zu Verunreinigungen an der streckgeblasenen Flasche führen können. Der Anspritzpunkt kann beim Streckblasen auch zu unregelmässigen Materialverteilungen führen, weil der Anspritzpunkt beim Strecken aus dem Zentrum zur Seite gedrückt wird. Diese Deformation des Anspritzpunktes beim Strecken kann zu Spannungen in der Flasche führen, die unmittelbar oder später bei der Lagerung Spannungsrisse oder Brüche verursacht. Insbesondere bei Flaschen, welche mit einem Innendruck beaufschlagt werden, können sich diese Spannungen überlagern.

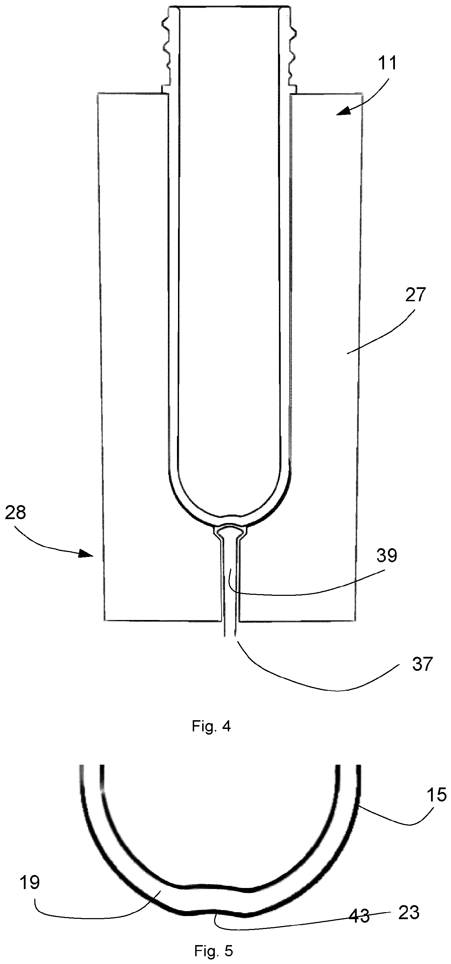

In Figur 4 ist der Preform 11 aufgenommen in einer erfindungsgemässe Abkühlvorrichtung 28 gezeigt. Eine solche Abkühlvorrichtung wird auch als "robot tube" bezeichnet. Die Vorrichtung 28 weist ein Gehäuse 30 auf, welches einen Innenraum 29 umrandet. Der Innenraum 29 ist von Seitenwänden 31 und einem Boden 33 begrenzt.

An der oberen Seite des Gehäuses 30 ist eine erste Öffnung 35 vorgesehen, durch welche der nach dem Spritzgiessen noch heisse Preform 11 in den Innenraum 29 eingesetzt werden kann. Der Supportring 17 kann an dem oberen Ende des Gehäuses 27 aufliegen. Die Innenabmessungen des Innenraumes 29 sind identisch mit den Aussenabmessungen des Preformkörpers 15. Der Innenraum 29 ist daher ein Negativabdruck des Preformkörpers 15.

An der gegenüberliegenden unteren Seite ist am Boden 33 eine zweite Öffnung 37 vorgesehen, durch welche Luft abgesaugt wird, um zwischen dem Preformkörper 15 und den Seitenwänden 31 und dem Boden 33 einen Unterdruck aufzubauen. Dadurch wird die Abkühlung des Preforms 11 beschleunigt, wodurch die Materialeigenschaften des Preforms 11 verbessert werden.

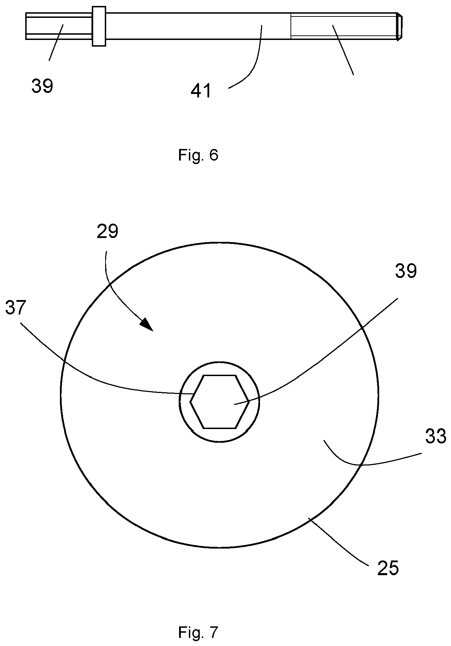

In bevorzugter Weise ist in der zweiten Öffnung 37 ein Stempel in Gestalt eines Schraubenkopfes 39 angeordnet. Wir Figur 6 zeigt ist der Schraubenkopf 39 Teil einer Schraube 41, welche der Befestigung des Bodens 33. bzw. der Vorrichtung 25 dient. Es versteht sich, dass die Schraube 41 ein Schraubengewinde 43 umfasst. Der Innendurchmesser der zweiten Öffnung 37 ist zweckmässigerweise grösser als der grösste Aussendurchmesser des Schraubenkopfes 39, damit ausreichend Luft durch die zweite Öffnung 37 abgesaugt werden kann (Figur 7).

Bei Aufbau des Vakuums, welches einem Absolutdruck von weniger als 0,9 bar entspricht, wird der Anspritzpunkt 23 an den Schraubenkopf 39 gedrückt. Dadurch, dass der Anspritzpunkt 23 eines der heissesten Teile des Preforms 11 ist, kann dieser besonders effizient verpresst werden. Dabei verschwinden Kanten und "Engelshaar" und die Abmessungen des Anspritzpunktes 23 werden reduziert. Dadurch sind alle oben erwähnten negativen Eigenschaften des Anspritzpunktes 23 nicht mehr vorhanden.

Bevorzugt ist es, wenn die Oberseite des Schraubenkopfes 39 flächenbündig mit dem Boden 33 ist. Dadurch kann eine möglichst glatte Oberfläche an dem Preformboden 19 im Bereich des Anspritzpunktes erreicht werden. Die Flächenbündigkeit kann durch die Anpassung der Länge des Schraubenkopfes 39 erreicht werden.

Denkbar ist es auch, dass der Stempel 39 den Boden 33 überragt, wie dies in Figur 4 gezeigt ist. Dann kann der Preformboden 19 nach innen gedrückt werden (Figur 5) und noch mehr Druck auf den Anspritzpunkt 23 ausgeübt werden.

### Legende:

- 11: Preform
- 13: Preformhals
- 15: Preformkörper
- 17: Supportring
- 19: Preformboden
- 21: Aussengewinde
- 23: Anspritzpunkt
- 25: Kanten
- 27: Engelshaar
- 28: Abkühlvorrichtung
- 30: Gehäuse
- 29: Innenraum
- 31: Seitenwänden
- 33: Boden
- 35: Erste Öffnung
- 37: Zweite Öffnung
- 39: Stempel, Schraubenkopf
- 41: Schraube
- 43: Schraubengewinde

## Patentansprüche

1. Verfahren zur Herstellung eines Preforms (11) wobei
- der Preform (11) nachdem er spritzgegossen wurde noch heiss in eine Abkühlvorrichtung (25) eingesetzt wird, welche Abkühlvorrichtung (25) einen Innenraum (29) aufweist, dessen Innenkonturen den Aussenkonturen des Preforms entsprechen, und
- zwischen den Innenkonturen des Innenraumes (29) und den Aussenkonturen des Preforms (11) ein Unterdruck erzeugt wird,
**dadurch gekennzeichnet,**
**dass** der beim Spritzgiessen an dem Preform (11) entstandene Anspritzpunkt (23) durch den Unterdruck an einen an der Innenkontur vorhandenen Stempel (39) gedrückt wird und an dem Stempel (39) verpresst wird.

2. Verfahren nach Anspruch 1, **dadurch gekennzeichnet, dass** der Anspritzpunkt (23) nach der Verpressung eine Länge und Höhe von weniger als 1 mm besitzt.

3. Verfahren nach Anspruch 1 oder 2, **dadurch gekennzeichnet, dass** der Unterdruck weniger als 0,9 bar Absolutdruck beträgt.

4. Abkühlvorrichtung (25) zur Abkühlung eines Preforms (11) gemäss den vorangehenden Verfahrensansprüche aufweisend
- ein Gehäuse (27) einen Innenraum (29) umrandend, welcher Innenraum (29) von Seitenwänden (31) und einem Boden (33) begrenzt ist
- eine erste Öffnung (35) durch welche ein Preform (11) in den Innenraum (29) einsetzbar ist und
- eine zweite Öffnung (37), durch welche Luft abgesaugt werden kann
**dadurch gekennzeichnet,**
**dass** an der Innenkontur des Innenraumes (29) ein Stempel (39) ausgebildet ist, an welchem der Anspritzpunkt (23) eines Preforms (11) positionierbar ist.

5. Abkühlvorrichtung nach Anspruch 4, **dadurch gekennzeichnet, dass** der Stempel (39) an dem Boden (33) angeordnet ist.

6. Abkühlvorrichtung nach Anspruch 4 oder 5, **dadurch gekennzeichnet, dass** die zweite Öffnung (37) an dem Boden (33) vorgesehen ist und der Stempel (39) in der zweiten Öffnung (37) angeordnet ist.

7. Abkühlvorrichtung nach einem der vorangehenden Ansprüche, **dadurch gekennzeichnet, dass** der Stempel der Kopf (39) einer Schraube (41) ist, welche Schraube (41) der Befestigung des Bodens (33) dient.

8. Abkühlvorrichtung nach Anspruch 7, **dadurch gekennzeichnet, dass** der Schraubenkopf (39) die Form eines Aussen-Sechskant-Kopfes besitzt.

9. Abkühlvorrichtung nach einem der vorangehenden Ansprüche, **dadurch gekennzeichnet, dass** der Innendurchmesser der zweiten Öffnung (37) grösser als der grösste Aussendurchmesser des Stempels (39) ist.

10. Abkühlvorrichtung nach einem der Ansprüche 7 bis 9, **dadurch gekennzeichnet, dass** die Schraube (41) derart in der zweiten Öffnung (37) angeordnet ist, dass die Oberseite des Schraubenkopfes (39) flächenbündig mit dem Boden (33) ist.

11. Abkühlvorrichtung nach einem der Ansprüche 7 bis 10, **dadurch gekennzeichnet, dass** die Höhe des Schraubenkopfes (39) derart bemasst ist, dass dadurch die Position der Oberseite des Schraubenkopfes (39) relativ zu dem Boden (33) bestimmt ist.

12. Preform (11) hergestellt nach einem der vorangehenden Verfahrensansprüche aufweisend
- einen Preformhals (13) und
- einen an den Preformhals (13) anschliessenden Preformkörper (15) mit einem Preformboden (19),
**dadurch gekennzeichnet,**
**dass** der Anspritzpunkt (23) ausgebildet am Preformboden (19) während des Spritzgiessens derart deformiert bzw. verpresst ist, dass er eine Länge und Höhe von weniger als 1 mm besitzt und frei von abstehenden Materialfasern ist.

13. Preform nach Anspruch 12, **dadurch gekennzeichnet, dass** der Preformboden (19) im Bereich des Anspritzpunktes (23) nach innen gewölbt ist.

14. Kunststoffbehälter, **dadurch gekennzeichnet, dass** der Kunststoffbehälter aus einem Preform nach einem der Ansprüche 12 oder 13 in einem Streckblasverfahren hergestellt ist.
